(19) Europäisches Patentamt
European Patent Office
Office européen des brevets

(11) Numéro de publication: **0 363 341 A1**

(12) **DEMANDE DE BREVET EUROPEEN**

(21) Numéro de dépôt: **89870080.2**

(51) Int. Cl.5: **A23L 3/00 , A23L 3/22**

(22) Date de dépôt: **31.05.89**

Le titre de l'invention a été modifié (Directives relatives à l'examen pratiqué à l'OEB, A-III, 7.3)

(30) Priorité: **03.06.88 LU 87232**

(43) Date de publication de la demande: **11.04.90 Bulletin 90/15**

(84) Etats contractants désignés: **AT BE CH DE ES FR GB GR IT LI LU NL SE**

(71) Demandeur: **Lefebvre, Paul Henri Joseph**
**8, Avenue Bel Air**
**B-1970 Wezembeek(BE)**

Demandeur: **Colinet, Edouard**
**27, Avenue Champel**
**B-1640 Rhode St Génèse(BE)**

Demandeur: **Lefebvre, Henri Jean Louis**
**103, rue de la Limite**
**B-1970 Wezembeek(BE)**

(72) Inventeur: **Lefebvre, Paul Henri Joseph**
**8, Avenue Bel Air**
**B-1970 Wezembeek(BE)**
Inventeur: **Colinet, Edouard**
**27, Avenue Champel**
**B-1640 Rhode St Génèse(BE)**
Inventeur: **Lefebvre, Henri Jean Louis**
**103, rue de la Limite**
**B-1970 Wezembeek(BE)**

(54) **Procédé continu de cuisson et de stabilisation par la chaleur de particules alimentaires en suspension et appareil pour la réalisation du procédé.**

(57) Un flux réglable, mais constant, de liquide est maintenu, par la pompe $B_1$, sous une pression pouvant, si nécessaire, être considérable , d'un réservoir à liquide A jusqu'au réservoir multifonction en service M O, et ensuite, sous une pression faible, jusqu'à un des réservoirs de magasinage U.

En fonction du débit du doseur de suspension E, le flux alimente le réservoir fermé, à suspension,en service, D, ou seulement le cuiseur G, ou les deux.

Il y a réchauffement en G, maintien à températures en I, déviation en K, sédimentation à chaud en M, sédimentation, refroidissement et stockage temporaire en O pendant que l'excédent de liquide de M O, refroidi en $Q_2$ et détendu en R, s'écoule par S T vers un réservoir de magasinage U, lequel est, de préférence, souple et immergé.

Le transfert des particules de M O vers U se réalise hydrauliquement pendant qu'un autre réservoir multifonction M O reçoit la suspension stabilisée et chaude.

Il y a décantation en M, en O, puis en U. Le liquide froid en excès au sommet de U est cyclé, via S′ et la pompe $B_4$, vers le réservoir M O, dont les particules sont à transférer vers U.

Le dispositif de cyclage permet, hors campagne, de mélanger intimement le liquide dans un réservoir, entre plusieurs réservoirs de magasinage et même d'augmenter sa teneur en extrait sec par introduction de sirops de sucre ou autres extraits concentrés; ceci, en utilisant des réservoirs souples spéciaux.

EP 0 363 341 A1

Xerox Copy Centre

PLANCHE 1

FIG 1

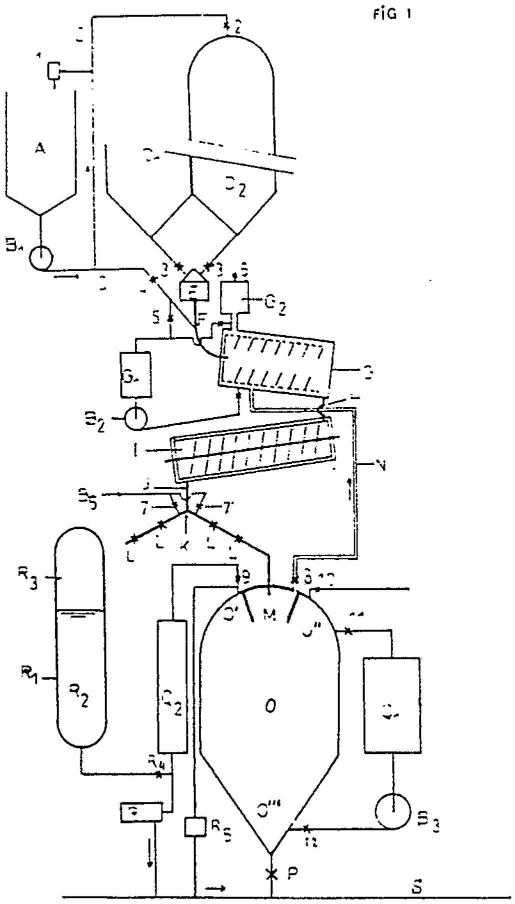

# PROCEDE CONTINU DE CUISSON ET DE STABILISATION PAR LA CHALEUR DE PARTICULES ALIMENTAIRES EN SUSPENSION DANS UN LIQUIDE SUIVI D'UN STOCKAGE ASEPTIQUE DES SUSPENSIONS STABILISEES ET APPAREILLAGE CONVENANT PARTICULIEREMENT A LA MISE EN OEUVRE DU PROCEDE.

Le procédé décrit dans ce brevet concerne l'industrie alimentaire et particulièrement la préparation de conserves d'aliments sous forme de "particules" naturelles ou obtenues par découpe de produits trop volumineux.

Ce procédé est caractérisé par la réalisation en continu des opérations de stérilisation et d'une cuisson plus ou moins profonde, par l'utilisation d'un stock de liquide stérile préparé avant la campagne de fabrication, par le fait que les opérations de cuisson et de stérilisation peuvent être réalisées sous une pression nettement supérieure à la tension de vapeur du liquide d'immersion à la température du traitement afin d'éviter les conséquences de l'expansion thermique de gaz présents ou formés dans les particules et/ou de provoquer une acidification temporaire du produit chaud résultant de la mise en solution de l'anhydride carbonique, , le $CO_2$, volontairement introduit dans l'installation, par la réduction extrême des chocs subis par les particules; par la mise sous pression de la suspension avant qu'elle soit dosée et chauffée, évitant ainsi de détèriorer le produit, la pompe ou les deux et forçant la plupart des gaz occlus résiduels à se dissoudre. Il permet aussi d'homogénéiser la composition du liquide d'immersion des particules dans un ou plusieurs réservoirs de stockage aseptique et, dès lors, d'homogénéiser aussi la composition du liquide présent dans les particules et enfin de corriger, s'il y a lieu, certaines caractéristiques du liquide d'immersion, cyclé.

Les produits à traiter peuvent être frais ou obtenus par réhydratation de produits sèchés.

Le procédé décrit permet un chauffage et un refroidissement extrêmement rapides des particules. Il permet de cuire et stabiliser à peu près identiquement chacune des particules d'un même flux dans un excès de liquide et de faire varier, dans une mesure importante les facteurs "durée température et pression" sans avoir à refroidir une quantité exagérée de liquide. Aussi permet-il de réduire certains des effets nuisibles du chauffage et de régler l'effet "cuisson" à peu près indépendamment de l'effet "stabilisation".

Les descriptions de l'appareillage polyvalent s'appuient sur les représentations schématiques figurant aux planches I à IX.

Descriptions et schémas sont explicatifs.Ils ne limitent pas la partée des revendications.

Les figures 1 et 2, planches I et II, concernent une installation convenant pour la grande majorité dans particules dans les conditions ci -après:

Dimensions des particules :

3 mm jusqu'à 100 mm.

Températures de traitement :

75° C à 150° C.

Durée du traitement à chaud :

1 à 30 minutes.

Surpression au delà de la tension de vapeur :

elle peut atteindre $2 \times 10^6$ pascals.(20bars)

Nature des particules :

Toutes les particules alimentaires, acides et non acides, capables de sédimenter dans l'eau et d'être convoyées par un courant d'eau. Certaines peuvent être riches en gaz dissouts ou occlus. Les particules à traiter, froides ou chaudes, peuvent avoir subi tous traitements préalables classiques dans les industries de la conserve.

Description sommaire du procédé:

Les produits à stabiliser sont introduits en D, où arrive aussi le liquide de mise en suspension des particules. On met D sous pression, grâ ce à du liquide provenant du réservoir A, via la pompe $B_1$.

Le doseur E introduit un flux déterminé de suspension dans le cuiseur G chauffé au moyen d'un circuit de liquide chaud préparé au moyen de $G_1$ et de $B_2$. A la sortie de G la suspension est transférée par la conduite H vers le chambreur I. La suspension chaude et stérile est transférée, via le déviateur K, vers un des décanteurs refroidisseurs MO et l'excédent de liquide chaud est renvoyé de M en G, via la tuyauterie N, munie ou non d'une pompe, selon l'efficacité en tant que pompe de I.

MO étant initialement rempli de liquide froid et stérile, l'excès de liquide correspondant au débit de la pompe $B_1$ est refroidi en $Q_2$ et, via la soupape de décharge R, ou une pompe volumétrique R, est dirigé par le tuyau S vers un réservoir de stockage U.

Après accumulation en O, les particules sont transférées vers U par S au moyen de liquide stérile et froid pulsé par la pompe $B_4$. Ce liquide provient, via la tuyauterie S′, d'un réservoir de stockage U.

Une installation polyvalente groupe plusieurs appareils dont certains, tels G, sont à choisir en fonction des particules à traiter et même à obtenir.

Dans les figures 1, 2, 8, 9, 10, 11 et 12 on a:

A : Réservoir contenant une quantité suffisante de liquide.

$B_1$ : Pompe volumétrique, dont le débit est réglable.

C : Tuyauteries entre $B_1$ et D et $B_1$ et F ( OU G )

D : Réservoir de préparation de la suspension de particules à traiter.

E : Pompe volumétrique ou doseur, réglable.

F : Tuyau.

G : Cuiseur, réglable.

$G_1$ : Echangeur de chaleur. ( eau/vapeur )

$B_2$ : Pompe de circulation du liquide à réchauffer.

$G_2$ : Petit réservoir contenant une faible quantité de gaz ( facultatif ). Il stabilise la pression.

H : Tuyau.

I : Appareil de chambrage, dit "chambreur", réglable.

J : Tuyau.

K : Déviateur de flux de suspension ( voir aussi les figures 5 et 6 ).

L : Vannes.

M : Décanteur dont le fond, ouvert, permet aux particiles chaudes et à leur liquide interstitiel (±40%) de sortir vers le liquide froid du réservoir O.

N : Tuyau.

O : Réservoir de refroidissement et de stockage temporaire des particules stabilisées.

P : Vanne.

$Q_1$ : Echangeur de chaleur. (eau/liquide de G)

$B_3$ : Pompe.

$Q_2$ : Echangeur de chaleur.

R : Vanne de décharge ou pompe volumétrique.

$R_5$ : Vanne de décharge.

$R_1$ : Réservoir contenant du liquide stérile $R_2$ et du gaz $R_3$, avec vanne $R_4$. But: stabiliser la pression, (facultatif.)

S : Tuyau.

82 : Echangeur de chaleur.

80-81 : Pompes.

$B_4$ $B_5$ : Pompes aseptiques.

T : Déviateur aseptique de flux de suspension ( voir aussi la figure 7 ).

$U_1$ : Réservoir souple, ne contenant encore que du liquide stérile. Il est immergé dans le liquide non stérile, froid, 55 du bassin 44.

$U_2$: Réservoir souple chargé de particules stabilisées ( voir aussi les figures 9 ).

44: Parois du bassin ( métal, béton, terre...) ( Voir aussi les figures 9 )

55: Liquide d'immersion du réservoir 44.

$X_1$: Liquide stérile de $U_1$.

$X_2$: Excédent de liquide stérile au sommet du réservoir $U_2$.

Y : Dépôt de particules en $U_2$.

51 à 54 : Poches souples à l'extérieur du réservoir U ( voir aussi les figures 9 ).

Certains accessoires sont très importants. Les vannes L, 8, 14 et 15, ainsi que celles requises pour vider aseptiquement les réservoirs U sont, de préférence, constituées par deux vannes en série. La tuyauterie entre vannes en série est alors maintenue stérile quand cela se justifie, selon des procédés connus.

La figure 3 représente un cuiseur à tapis et à gaz.

La figure 4 représente un cuiseur à tambour rotatif pouvant être utilisé avec ou sans atmosphère gazeuse.

Dans ces figures on a:

| | | | | | | | | | | | | |
|---|---|---|---|---|---|---|---|---|---|---|---|---|
| E | : | Pompe volumétrique transférant vers le cuiseur la suspension de particules à traiter. | | | | | | | | | | |
| F | : | Conduite entre la pompe et le cuiseur. | | | | | | | | | | |
| G | : | Cuiseur. | | | | | | | | | | |
| H | : | Conduite entre le cuiseur et le chambreur I. | | | | | | | | | | |
| $B_2$ - $B'_2$ - $B''_2$ - $B'''_2$ | : | Pompes de circulation. | | | | | | | | | | |
| $G_1$ - $G'_1$ - $G''_1$ - $G'''_1$ | : | Echangeurs de chaleur. (voir $G_1$) | | | | | | | | | | |
| 60 | : | Partie | supérieure | du | convoyeur. | | | | | | | |
| 61 | : | " | inférieure | " | " | | | | | | | |
| 62 | : | Tuyauteries de répartition du liquide chaud cyclé. | | | | | | | | | | |
| 63 64 65 | : | Réservoirs contenant le liquide alimentant pompes et échangeurs. | | | | | | | | | | |
| 66 | : | Liquide | en | 63 | et | au | fond | du | cuiseur | à | tapis | (fig.3) |
| 67 | : | " | " | 64 | " | " | " | " | " | " | " | " 3 |
| 68 | : | | | | | | | | | | | |
| 69 | : | | | | | | | | | | | |
| 70 | : | Niveau | maximum | du | liquide | en | H | (approximatif- | fig.3) | | | |
| 71 | : | " | minimum | " | " | " | " | " | " 3 | | | |
| 72 | : | " | maximum | " | " | dans | le | cuiseur | de | la | fig. 4. | |
| 73 | : | Niveau | minimum | " | " | " | " | " | " | " | fig.4. | |
| 74 | : | | | | | | | | | | | |
| 75 | : | | | | | | | | | | | |
| 76 | : | | | | | | | | | | | |
| 77 | : | | | | | | | | | | | |
| 78 | : | | | | | | | | | | | |

Dans la figure 5 on a:

J : Conduite d'alimentation.

20 et 21 : Conduites de sortie.

23 : Charnière de commande externe.

24 : Clapet basculant, plutôt rectangulaire. Il est réalisé de façon à transmettre un minimum de chaleur du flux chaud au liquide froid introduit entre ce clapet et la vanne $L_1$ quand on n'alimente plus le réservoir $O_1$.

7, 7′ : Vannes sur la tuyauterie de liquide froid stérile, cyclé par la pompe $B_5$ ou 80 (fig.2 et 8).

Dans la figure 6 on a:

J 20 21 : Voir figure 5.

22 : Troisième conduite de sortie.

26 : Corps du déviateur.

27 : Boisseau sphérique, allégé, creux.

28 : Espace libre, entre le rotor et le stator.

29 : Tuyau légèrement courbé, déviant le flux.

30 : Commande de la position du boisseau.

Le corps et le boisseau creux, peuvent aussi être cylindriques ou tronc-coniques. Le boisseau est creux, allégé, semi-flottant. Des galets, non représentés, maintiennent à peu près constant l'espace libre entre le rotor et le stator.

Une ferme de magasinage aseptique normale comporte de nombreux réservoirs U et donc de déviateurs aseptiques T, dont le rôle est très important.

Supposons que le déviateur ait une entrée et 5 sorties. La figure 7 le décrit schématiquement. On a:

| | | | | |
|---|---|---|---|---|
| S | : | tuyau d'arrivée du produit. | | |
| 31<br>32 | :<br>: | articulation<br>" | sphérique<br>" | mâle de S (ou femelle)<br>femelle de 33 (ou mâle). |
| 33 | : | tuyau rigide de déviation du flux. | | |
| 34 | : | corps du déviateur. Il a ici une forme relativement tronc-conique. | | |
| 35 | : | fond de 34 bombé ou plat. | | |
| 36 | : | Disque ou arbre rotatif positionnant 33. | | |
| 37 | : | commande aseptique de la rotation de 36. | | |
| 38 | : | index extérieur montrant la position du déviateur 33. | | |
| S | : | tuyau de sortie du flux destiné à un autre déviateur. | | |
| 39-40-41-42 | : | tuyaux de sortie du flux dévié vers 4 réservoirs. | | |

La figure 9, planche VI concerne un réservoir souple spécial U. On a:

43 : Membrane du réservoir souple. Elle résiste au moins à 100°C, comporte une couche de matériau barrière vis à vis de l'oxygène et peut être renforcée par des fibres

44 : Bassin ( béton, briques, métal, terre...). Il contient le liquide d'immersion du réservoir souple.

14 : Vanne aseptique de chargement. Il s'agit de préférence d'une paire de vannes de section appropriée. La vanne de vidange aseptique des particules n'est pas indiquée. Elle est, par exemple, raccordée entre 14 et l'entrée de 46 dans le bassin.

15 : Vanne aseptique sur la tuyauterie rigide alimentant les pompes $B_4$, $B_5$. Il s'agit de préférence de deux vannes en série.

45 : Canal pour 46 - 47 - 48 - 49.

46 : Tuyauterie principale.

47 : Courts tuyaux flexibles permettant de diriger le flux de suspension ou de liquide provenant du tuyau 46 vers là où les zones du réservoir qu'on tient à alimenter.

Quand la longueur du réservoir est considérable, on peut aussi prévoir une arrivée 48 par fond hémisphérique.

49 : Obturateurs télécommandés, de préférence du type pince n'écrasant jamais complètement le tuyau souple, à ne pas dètèriorer.

50 ( en 9B ): Flotteurs isolant le contenue du bassin 44. Chaque élément 47 est de section suffisante. Le canal 45 est recouvert sauf à l'endroit de passage des tuyaux souples 47-48.

Les éléments 51 à 54 des figures C,D,E,F,G sont souples et situés à l'extérieur du réservoir de stockage auquel ils sont soudés.

Ils constituent des poches. Chacune peut être remplie selon le besoin, d'eau, d'eau et de gaz, ou encore d'un liquide de poids spécifique élevé tel, par exemple, une solution concentrée de chlorure de calcium.

Les réservoirs des figures 2 - 9 ne conviennent pas lorsque les particules stabilisées dans l'eau sont ensuite à enrichir fortement en sucre ou sirop riche en sucre. Le réservoir souple de la figure 10 permet de résoudre ce problème. On a:

44 : Bassin

55 : Liquide d'immersion de 44.

45 : Canal.

U : Réservoir souple.

56 : Ouverture au sommet de U avec une collerette circulaire.
57 : Cylindre rigide, métallique, creux, flottant ou semi flottant, léger.
13 : Vanne.
58 : Tuyau, rigide ou flexible, de reprise du liquide du réservoir.
59 : Tamis, souple et flottant.
60 : Eventuel tuyau d'amenée d'un gaz dans le flotteur de 59.
46 : Arrivée du produit.
47 : Un des nombreux tuyaux souples de chargement de U
49 : Pince de 47.

La figure 11 représente une installation, permettant le traitement continu fractionné ( F.S.T.P.).
Elle est similaire à la figure 1.
Ses éléments A, $B_1$, $D_1$, $D_2$, E, sont en dessous du cuiseur et on a:
Une longue conduite F pouvant servir de blancheur ou de laveur à chaud.
Un cuiseur à tapis et à gaz G. Il est incliné.
Pas de chambreur I.
Vu l'absence de chambreur, une pompe est prévue en 86 sur la conduite N.
Le liquide alimentant l'extrémité du cuiseur G est stabilisé avant de parvenir dans la conduite H.
Voir la pompe $B''_2$ , l'échangeur $G''_2$ et le tuyau de chambrage 87.

La place pour un chambreur I est à prévoir en H.

Un petit chambreur diminue les risques de sous stérilisation.Un grand chambreur augmente la capacité de la ligne pour les particules de grande taille.

La pompe 86 peut encore se justifier quand il s'agit d'un petit chambreur.

La figure 12 concerne une installation plus simple que celle de la figure 11. On a:

A, $B_1$, $D_1$, $D_2$, E et autres accessoires: ils sont situés en dessous du cuiseur G. Ces appareils sont connus.

F : Long tuyau pouvant servir, soit de pré-cuiseur, soit de laveur à chaud et même, en allongeant le tuyau, de cuiseur tubulaire.

G : Cuiseur à tambour perforé rotatif (voir fig.1 et 4)
H,I,J,K,L : connus.
88 : Réservoir contenant une grille ou tamis retenant les particules et du gaz non oxydant.
89 : Grille ou tamis.
90 ( ou 77 dans la figure 4 ) : Gaz.
91 : Tuyau entre 88 et le sommet de G.
92 ( F dans les autres figures ) : Tuyau de transfert de la suspension de 88 vers G.
93 : Fond de 88 accumulant un minimum de liquide.
94 : Tuyau.
95 : Extraction éventuelle d'une fraction du flux de liquide.
96 : Introduction du liquide frais remplaçant celui extrait en 95.
97 : Introduction de liquide provenant de $B_1$.

98 : Vanne de décharge éventuelle diminuant la pression du liquide, afin que la pression en amont de E soit égale ou légèrement supérieure à la pression en aval de ce doseur.

99 : Pompe volumétrique pouvant aussi alimenter 96 et servant aussi à maintenir à peu près constant le niveau du liquide en G et 88.

100: ( pompe $B'_2$ dans la figure 11 )

101: Tuyau alimentant F dès la sortie de E. Son débit est faible.

102: Tuyau alimentant F à une certaine distance de E. Son débit est élevé et ce flux peut être mélangé à celui de F en plusieurs endroits.

103: ( $G'_1$ dans la fig. 12 ) Echangeur de chaleur maintenant la température à peu près constante en G et donc en 88.

Quelle que soit l'installation, on commence par stériliser complètement, par des moyens appropriées tous les appareils et réservoirs situés en aval des vannes L. Pour l'équipement rigide on recourt à la vapeur et à l'eau chaude.
Pour les réservoirs et tuyauteries souples ( U, 47, 48, 59 ), on met en oeuvre la température, limitée à environ 100 °C, et des produits chimiques, alcalis, acides, germicides. On vérifie biologiquement que l'équipment, parfaitement débarrassé de toutes traces de produits chimiques, est totalement stérile en consacrant à ce test, exigeant une incubation in situ, le temps nécessaire.

Ensuite, on fait en sorte que tous les appareils en aval des vannes L soient remplis de liquide aqueux stérile et froid, le degré de remplissage des réservoirs U, souples, étant limité à ce qu'exige ensuite la réalisation, en ces derniers, du recyclage, après sédimentation des particules stabilisées, de l'excès de liquide surnageant ayant à retourner, par 15 - $B_4$, vers le réservoir O, dont les particules stériles et froides sont à transférer vers le fond de U, vis S, T et 14.

Quant l'installation en aval de L est prête, reste à ajouter du liquide provenant de A en D E F G H I J K, à le chauffer et stériliser entre G et L, de façon à réaliser aussi une stérilisation complète de l'intérieur des appareils de E à L, y compris N et les éventuelles pompes 80 - 81 - 86.

Au besoin, introduire en G le gaz nécessaire et y ajuster les niveaux minimum et maximum atteints par la suspension en réglant la commande de la soupape de décharge ou de la pompe volumétrique R. maintenant constante la pression en aval et le flux de produits. Equipement et liquides ayant la stérilité voulue, la température et la pression désirées, et les facteurs "durées / températures / pressions" ayant été réglés, on peut alimenter la ligne en particules.

On opère en continu de E à K, en discontinu avant E et après K, comme suit:

Le liquide de A, pompé par $B_1$, arrive soit en D, soit en F, en aval du doseur E.

Dès que E fonctionne, bien que la pression soit pratiquement identique à l'entrée et à la sortie de E, la suspension de D est envoyée par F en G.

Si E est arrêtée, le flux de $B_1$ est maintenu grâce au by-pass " $B_1$-C-4-F ". Ceci assure la continuité du traitement thermique et du flux.

Il y a chauffage ultra rapide dans un excès de liquide chaud en G, quel que soit le type de cuiseur utilisé ( voir fig. 1-2-3-4-8-11-12 )

S'il s'agit d'un cuiseur contenant aussi du gaz, azote, $CO_2$ ou azote et $CO_2$ ( fig. 3-4-11-12 ) avec pluies de liquide chaud ( fig.3 et 11 ) ou immersion des particules ( fig.4 ) le rôle du gaz sous pression est de réduire la durée de cuisson du liquide, s'il s'agit d'azote pur et aussi d'abaisser son pH en fonction des paramètres "pression partielle du $CO_2$/ température" afin d'obtenir, grâce à cette acidification légale et temporaire, tout ou partie des effets suivants:a) diminution de la caramélisation des produits, b) texture plus ferme des particules stabilisées, c) destruction plus rapide des microorganismes et des enzymes.

Le cuiseur "G" réchauffe mais ne peut assurer une stérilité complète quand le liquide y subit un mélange, comme dans les cuiseurs à tambour ( fig.1-2-4 ). S'il s'agit d'un cuiseur à tapis, incliné ( fig. 11 ), il est possible, en alimentant sa sortie en liquide complètement stérilisé en $G''_2$ et 87, de se passer du chambreur I entre H et K. Toutefois un chambreur est conseillé, par prudence.

Le chambreur I comporte un convoyeur à vis sans fin, plein . Il est isolé ou muni d'une double paroi avec chauffage, par précaution, mais reçoit de H la suspension contenant les calories nécessaires.

En I, les particules se déplacent positivement à une vitesse légèrement supérieure à celle du liquide. Durées et températures sont choisies de façon à obtenir la stérilité totale en J, à la sortie du chambreur. Celui-ci contient plus de liquide que normalement exigé par une suspension de particules à stabiliser, soit plus de 40%. Aussi les particules sédimentent -elles à l'intérieur de I et la suspension, fluide, s'écoule bien de I en M.

Le déviateur K ( fig. 5 ), à clapet, suffit quand on n'a que deux réservoirs M-O à alimenter alternativement. Ceci suffit généralement.

Pour en alimenter plus de deux, on peut placer deux déviateurs, type fig. 5, en série, ou utiliser un déviatuer K à boisseau type fig. 6, d'un type nouveau.

La suspension arrive dans le décanteur sous pression, statique, à fond ouvert , M, incorporé au réservoir O, ou distinct de ce dernier.

Les particules chaudes y sédimentent.

L'excès de liquide chaud et stérile retourne par 8 et N vers G; ceci, par le chambreur I fait office de pompe ou encore grâce à l'action d'une pompe 86 ( fig.11 ), quand ceci s'impose, vu les caractéristiques hydrauliques des appareils G et I.

Le liquide chaud est remplacé par du liquide tiède ou froid, autour des particules, déjà en M et de toutes façons dès que celles-ci quittent l'enceinte de M.

Le refroidissement sous contre-pression faible, élevée ou très élevée, selon réglages et installations, des particules, est ultra rapide entre M et le moment où les particules ont sédimenté dans le liquide contenu en O.

Ce liquide est refroidi continuellement par l'échangeur $Q_1$, grâce à la pompe de circulation $B_3$.

Le dépôt de particules, en $O'''$, immobile vu la faible vitesse ascensionnelle du liquide en O, est par faitement refroidi.

Le liquide en excès en MO, dont le débit est en permanence celui de la pompe $B_1$ puisque D ne contient pas de gaz en quantité significative, sort par 9. Il est refroidi en $Q_2$, un échangeur. Sa pression est abaissée en R et il s'écoule via S, T vers celui des réservoirs U qu'on alimente.

Après 15, 30, 60 minutes, selon l'installation, le réservoir O étant partiellement rempli de particules stabilisées et refroidies, on alimente un autre réservoir O, isole le premier du déviateur K et transfère hydrauliquement vers STU les particules de $O_1$.

Le procédé étant particulièrement apte à traiter des légumes frais, dont la période de récolte est très courte en certains pays, ( 600 à 1000 heures pour les pois frais, jeunes, tendres, très fragiles surtout immédiatement après avoir été stérilisés par la chaleur ).

Les exigences de la commercialisation et du conditionnement aseptique final en emballages détail sont telles que les quantités à traiter peuvent être les suivantes:

80 litres/minute aux remplisseuses et 5000 H.de fonctionnement annuel de celles-ci, fort coûteuses, donnent 24.000 m3/an.

-24.000 m3/an et 600 H. de récolte/an, donnent 40 m3/H à traiter. Pour 10.000 m3/an et 1000H/an on a encore 10 m3/H, appréciable.

Or des débits du type "10 à 40 m3/H" exigent la présence d'un grand excès de liquide lors des transferts hydrauliques, de O en S, T, U, sur des distances importantes, pouvant dépasser 100 mètres.

Le liquide stérile présent en $U_1$ (fig.2) avant le premier transfert de O vers U, permet aux particules d'y sédimenter. Le liquide stérile revient par 15 -S′ - $B_4$ vers O et, d'une part y refoule la suspension vers P, S, T, U, mais aussi introduit en S l'excès de liquide requis pour ne pas y détèriorer les particules fragiles.

Les multiples entrées 47 - 48 des réservoirs U, les obturateurs externes télécommandés 49, dont sont munies les entrées souples, permettent de limiter les remous en U et aussi de bien y répartir le liquide cyclé en vue , parfois, d'homogénéiser la saveur du contenu de plusieurs réservoirs U.

Les poches externes 51-52-53-54 des réservoirs U, confèrent à ceux-ci, en début de remplissage et aussi lors de leur vidange finale, des formes facilitant les opérations " sédimentation / mélanges / vidanges " dans les réservoirs souples dont la capacité unitaire peut être comprise entre moins de 50 M3 et plus de 500 M3.

L'aptitude à permettre, via S′ , $B_4$, S, T,..., de mélanger la phase liquide de deux ou plusieurs réservoirs U chargés de particules stériles permet aussi de confire aseptiquement celles-ci, à froid, dans les réservoirs U comportant, outre de nombreuses entrées ( 47-48 ), un tamis flottant, amovible ( 59, figure 10 ) et un obturateur rigide 57.

On procède comme suit:

Introduire par 46-47 du sirop stérile et froid de sucre ou de jus de fruits.

Le tamis flottant 59 retient les fruits et laisse passer le liquide d'immersion, pauvre en extrait sec, vers 15 et 58, S′, etc...

Ce liquide est, normalement, à concentrer. On en récupère au besoin les arômes volatiles.

Après mélange, grâce à la pompe $B_4$ et repos, il y a équilibrage de la teneur en extrait sec soluble du liquide et des particules, que celles-ci soient des fruits stérilisés, des marrons ou outres végétaux.

En une opération, on ne peut réaliser qu'un confisage partiel. Après plusieurs opérations successives, on obtient une teneur en extrait sec élevée, de l'ordre de 65%, conférant au contenu du réservoir U une activité de l'eau faible et donc une stabilité biologique parfaite, même en présence de micro-organismes.

L'extraction du produit fini peut alors se réaliser également par le dessus du réservoir, à restériliser ensuite.

Les végétaux confits aseptiquement, à froid, lentement, constituent des produits nouveau, ils conservent les arômes et saveurs délicats des fruits traités, leurs vitamines, etc...

Les accessoires 57-59-60 de la figure 10 sont nécessaires pour confire. Ils ne gènent pas dans les autres cas.

La stérilité totale de l'installation est indispensable, liquide compris, de L à U, S′, $B_4$, or, une installation, réservoirs U inclus, occupe une grande surface.

Ceci impose l'emploi de déviateurs aseptiques de flux en T ( voir la figure 7 ) comportant une arrivée de produit S, un tuyau déviateur 33, une sortie directe vers la suite de S et plusieurs sorties 39-40-41-42, chacune vers un autre réservoir U.

Ceci facilite le changement de réservoir U, par exemple, quand on stabilise successivement plusieurs qualités d'un même type de particules, tels les pois frais.

Dans la figure 8, la grille 83 évite que des impuretés flottantes ou semi-flottantes puissent atteindre l'échangeur de chaleur $Q_2$ et aussi la soupape de décharge R.

Une arrivée de liquide tiède, en 85, peut, s'il y a lieu, accélérer déjà en M le refroidissement du liquide et donc des particules.

L'échangeur 82, facultatif, sert à amener en G du liquide non refroidi en N.

Les pompes 80, 81 servent à éviter toute surcuisson du liquide en K ou entre L et M.

Les éléments $R_1$, $R_2$, $R_3$, $R_4$, $R_5$ de la figure 1 sont des accessoires décrits dans le brevet luxembourgeois. Ils ne servent, en certains cas, qu'à mieux maintenir constante la surpression.

On sait calculer la probabilité de survie des spores et des enzymes subissant des traitements thermiques déterminés dans un milieu non acide. Ceci a été beaucoup étudié pour l'industrie des conserves stérilisées en emballages détail.

Les connaissances sont encore imparfaites quand le milieu est acide ou acidifié, mais, toujours la vitesde la thermo-destruction est supérieure.

S'il ne survit, après une minute, qu'une seule spore sur $10^n$ spores initialement présentes dans un liquide chauffé, dont le pH est 7, la température, constante, étant "t", la probabilité de survie des spores est de

$$\frac{1}{10^n} \text{ ou } 10^{-n}.$$

Pour le clostridium botulinum, n = 4,7619 quand t = 121.1 °C.

Les législations exigent, pour les aliments non acides, qu'ils aient subit en leur endroit se réchauffant le moins vite, un séjour à température létale équivalent à 3 minutes à 121.1 °C. Dans ce cas 3 n = 14,28. La probabilité de survie est de $10^{-14,28}$.

Les valeur "n" pour diverses spores thermo-résistantes sont groupées dans le tableau suivant:

| | | | | | | |
|---|---|---|---|---|---|---|
| A | : | Clostridium | Botulinum | | | |
| B | : | " | Sporogenes, type PA 3679 | | | |
| C | : | " | Thermosaccharolyticum | | | |
| D | : | Bacillus | Stearothermophilus | | | |
| E | : | " | Subtilis | | | |
| SP. | 110 °C | 115 °C | 120 °C | 124 °C | 127 °C | 128 °C |
| A | 0,37 | 1,169 | 3,696 | 9,28 | 18,5 | 23,3 |
| B | 0,064 | 0,19 | 0,562 | 1,34 | 2,6 | 3,2 |
| C | - | - | 0,014 | 0,95 | 21,8 | 62 |
| D | 0,006 | 0,034 | 0,174 | 0,65 | 1,7 | 2,4 |
| E | 0,184 | 0,447 | 1,083 | 2,2 | 3,7 | 4,4 |
| | 129 °C | 130 °C | 131 °C | 132 °C | 133 °C | 134 °C |
| A | 29,3 | 37 | 46,5 | + | + | + |
| B | 4 | 4,9 | 6,1 | 7,6 | 9,4 | 11,7 |
| C | 177 | + | + | + | + | + |
| D | 3,3 | 4,6 | 6,5 | 9 | 12,5 | 17,4 |
| E | 5,3 | 6,3 | 7,6 | 9 | 10,8 | 12,9 |

Il ne survit donc qu'une spore "B" sur $10^{30,4}$ ou une spore D ou E sur $10^{35}$ après 4 minutes à 132 °C, le pH étant 7. Ceci correspond en réalité à la stérilité absolue.

Pour les particules, les choses sont moins simples car les phénomènes ci-après interviennent: a) La température au centre des particules s'élève moins rapidement qu'à leur périphérie. b) Dès traces de gaz, présentes ou formées dans les tissus ont un effet isolant. c) Spores et enzymes ne sont pas nécessairement répartis de façon régulière. d) Le pH tend à changer en cours de traitement thermique.

Le principal facteur est a), mais b et c ne sont pas négligeables.

Pour les petites particules, moins de 10 à 12 mm de coté ou de diamètre, seules à pourvoir actuellement être conditionnées aseptiquement en briques ou en bocaux, une durée de séjour d'une à une minute et demi dans le cuiseur G suffit pour obtenir un bon équilibre des températures. Quand de très grandes particules seront à stabiliser, des durées de chauffage plus longues seront nécessaires.

Le facteur"gaz" est important. Une surpression élevée et une agitation lente tendent à en réduire l'influence.

L'effet du pH, très important, est bien connu du point de vue pratique, car la plupart des spores sont incapables de germer en milieu acide. Toutefois, actuellement,l'acidification temporaire réalisable grâce à la présence de $CO_2$ n'est pas encore prévue en vue de réduire la sévérité des barêmes. Ceci sera réalisable plus tard.

La plupart des particules exigent aussi d'être rendues tendres par cuisson. Nous avons observé qu'une faible acidification temporaire, obtenue grâce au $CO_2$, permet de réduire la tendreté des particules stérilisées sans modifier leur aptitude à devenir tendres ensuite, lors de la cuisson ménagère préalable à la consommation du produit. De plus, cette acidification empêche la caramélisation et donc limite nettement le développement du "goût de cuit".

Nous avons aussi observé que bien des particules explosent en devenant anormalement tendres quand les gaz qu'elles contiennent, ou qui s'y forment en cours de traitement thermique s'y dilatent rapidement et exagérément, lors du réchauffage initial rapide.

Les particules arrivant dans le cuiseur G sont, soit froides, soit très chaudes, plus de 70° C.

Elles sont immédiatement mises en présence d'un excès de liquide dont la température est, pour les légumes amidonneux, de l'ordre de 132° C. Une surpression élevée s'oppose alors à l'expansion brutale des gaz et permet de protéger la texture et l'intégrité de forme des particules.

Les quelques exemples concernent:

I) Les pois jeunes,tendres, succulents, n'absorbant pas de liquide en cours de cuisson et de stabilisation.

II) Les pois mûrs, durs, absorbant 30% de liquide en cours de traitement. Les pois et les haricots secs, réhydratés, sont assimilables à ces particules et peuvent absorber plus d'eau encore.

III) Les graînes de maïs, jeunes.

IV) Les carottes en cubes, n'absorbant pas de liquide.

V) Les cubes de fruits acides, pH 3,5, contenant 10% de substancessolubles et n'absorbant pas de liquide.

VI) Les fruits acides, pH 3,5, oreillons ou entiers, avec ou sans noyaux. Les conditions à réunir pour traiter ces particules typiques sont les suivantes, pour un débit de 10M3/H de suspension:

Pour I: Débits en $B_1$ et E : 10 m3/H.

Une minute en G, à 133° C.

4 min. en I à 132° C.

Pression en G: 8 K°/cm2.

Pour II: Débit moindre en E qu'en $B_1$ vu l'absorption d'eau de ces particules. Ceci se calcule facilement. Ils faut 10 m3/H en $A_1$ et 7,5$m^3$/H en E.

Choisir barêmes selon les traitements préalables subis par les particules, soit:

En G: 1,5 min/131° C En I: 6 min. à 130° C ou

En $G_1$: 3 min/127° C, en $G_2$: un second cuiseur en série 1,6 min à 132-133° C,

en I: 4 min. à 132° C ou

En G: 1,5 min à 129-130°C. } Surpression élevée,
En I: 8 min à 129°C } ± 8 Kg/cm2.

Pour III: Comme pour I.

Pour IV : Comme pour I, supression élevée.

Pour V : Abaisser le pH du liquide jusqu'à 4,3 et mieux 3,5. Barêmes similaires à ceux utilisés pour I, mais vers 90 à 105° C.

Pour VI : 10 à 25 minutes vers 90° C en G, le pH étant bien contrôlé, puis 3-4 min. à la même température en I.

En certains endroits,en M, O, $Q_1$, $Q_2$, de l'installation, sont réunies les conditions de température et de durée permettant à des spores de germer entre 30 et 65° C. Or, ces installations doivent pouvoir fonctionner, jour et nuit. Vu ceci, il est indispensable d'obtenir la stérilité pratiquement absolue pour tous les produits non acides dans lesquelles des spores viables sont susceptibles de germer.

Si on obtient une probabilité de survie de $10^{-36}$ pour les spores du bacillus stéarothermophilus ( le flat-Sour ) et du bacillus subtilis, et qu'on a 10.000 spores par litre, au départ, soit $10^7$ spores par mètre cube de suspension à stabiliser, il ne survit qu'une spore par $10^{(36-7)} = 10^{29}$ mètres cubes de suspension stabilisée. Or, la prodution mondiale annuelle ne parait pouvoir dépasser $10^6$ mètres cubes. Il y a donc stérilité absolue.

Cette stérilité serait compromise si le débit de matières était variable dans le cuiseur et le chambreur, d'où l'importance extrème du système d'alimentation positive, réglable, continu du cuiseur G, en particules et liquide ou seulement en liquide si le réservoir D ne contient plus de particules ou si le doseur volumétrique E est arrêté.

En l'absence du système d'alimentation constitué par A, $B_1$, C , D, E et le by-pass $B_1$-C-F des figures 1 et 2, il serait impossible de maintenir rigoureusement exacts les débits de liquide et de particules, dont les

| | | | | |
|---|---|---|---|---|
| a) | De | vapeur | d'eau | et d'un gaz inerte ou |
| b) | " | " | " | et d'anhydride carbonique ($CO_2$)ou |
| c) | " | " | " | d'un gaz inerte et de $CO_2$ |

8 - Procédé selon la revendication 7, caractérisé en ce que la pression partielle du $CO_2$ est telle que la concentration en $CO_2$ de la suspension ou du moins de son liquide est comprise entre 0,1 et 1 gramme par litre, sans dépasser la limite de solubilité du $CO_2$ dans le produit refroidi.

9 - Procédé selon la revendication 7, dans lequel la concentration en $CO_2$ de la suspension chaude est comprise entre 1 et 2 grs par litre, l'excès de $CO_2$ étant éliminé de la suspension pré-refroidie et encore chaude avant de poursuivre son refroidissement sous contre-pression rétablie au niveau initial.

10 - Procédé selon la revendication 6, dans lequel le $CO_2$ est introduit directement dans le liquide chaud de cuisson et de stabilisation.

11 - Procédé selon les revendications 1 à 5, dans lequel le $CO_2$ est introduit sous pression dans le liquide et/ou dans la suspension devant encore être traitée.

12 - Procédé selon les revendications 1 à 5, dans lequel le $CO_2$ est introduit directement dans le liquide de refroidissement des particules en vue d'en abaisser le pH.

13 - Procédé selon les revendications 7 à 12, dans lequel la pression partielle du $CO_2$ ou la quantité de $CO_2$ injectée dans le liquide est telle que le pH de la suspension est compris entre 7 et 3,3.

14 - Procédé selon les revendications 1 à 13 dans lequel les particules cuites et stabilisées sont séparées du liquide de suspension chaud, lequel est remplacé par du liquide de mise en suspension stérile et froid dont la température ne dépasse pas 70 °C.

15 - Procédé selon la revendication 14 caractérisé en ce qu'il met en oeuvre successivement dans un même appareil ou dans deux appareils superposés communiquant entre eux, d'abord, dans la partie haute, une décantation à chaud, puis en dessous du décanteur à chaud, une décantation à froid; la température du liquide du décanteur froid étant maintenue à la valeur choisie par une circulation de liquide stérile et froid passant par un échangeur de chaleur et une pompe de circulation extérieure; la vitesse verticale du flux ascendant de liquide froid assurée par la pompe de circulation étant inférieure à la vitesse de sédimentation des particules en suspension dense dans le liquide froid.

16 - Procédé selon la revendication 15 dans lequel la suspension stabilisée se sépare en suspension dense contenant environ 40% de liquide interstitiel et en liquide excédentaire, lequel retourne, par une tuyauterie sous l'action d'une pompe, vers le cuiseur; la pompe étant, ou non, le convoyeur à vis du chambreur, alors que la suspension dense sort par le fond ouvert du décanteur à chaud.

17 - Procédé selon les revendications 14 à 16,dans lequel les particules refroidies sont accumulées temporairement dans le réservoir multifonction en service ( suivant les revendications 14 et 16 ) puis en sont transférées hydrauliquement, après réduction de la contre pression, vers un réservoir de magasinage en service; la quantité de liquide, stérile et froid, présente dans ce dernier réservoir devant suffire pour y assurer les opérations de décantation des particules et de récupération, au sommet du réservoir, du liquide dépourvu de particules alimentant par pompe le réservoir dont on évacue les particules.

18 - Procédé selon les revendications 14 à 17, dans lequel l'équivalent en liquide stérile du flux de matières introduit dans l'installation de cuisson et stabilisation parvient dans un réservoir de magasinage pendant qu'on accumule les particules dans celui des réservoirs de refroidissement en service.

19 - Procédé selon les revendications 17 et 18 dans lequel le recyclage du liquide froid et stérile du réservoir de magasinage vers les réservoirs de refroidissement et de stockage temporaire assure un mélange significatif du liquide d'immersion des particules stabilisées.

20 - Procédé selon les revendications 18 et 19 dans lequel les opérations ci-après sont améliorées grâce aux réservoirs souples spéciaux:

a) La séparation du liquide du dépôt de particules
b) Le mélange du liquide d'immersion des "
c) Le mélange du liquide d'immersion et du liquide interne des particules, ainsi que les

produits de réservoirs différents.

21 - Procédé selon la revendication 20, dans lequel l'enrichissement en sucre ou autres produits solubles dans l'eau de la suspension est réalisée aseptiquement lors d'un traitement post-cuisson et stabilisation des produits emmagasinés aseptiquement dans des réservoirs spéciaux comportant une grille ou tamis; cet enrichissement correspond, par exemple, au sucrage ou au confisage des produits.

22 - Procédé selon la revendication 7 caractérisé en ce que les particules étant cuites, hydratées et stabilisées partiellement par des pluies de liquide chaud, sont mélangées à du liquide chaud ayant, soit une température égale ou légèrement supérieure à celle des particules, soit une température nettement plus élevée que ces dernières quand on reconstitue la suspension en fin d'appareil, la stabilisation restant à compléter ensuite.

23 - Procédé selon la revendication 7 dans lequel les particules et le liquide étant déjà stabilisés quand il y a reconstitution de la suspension, le maintien de celle-ci à température élevée n'est plus nécessaire.

24 - Procédé selon les revendications 22 et 23 dans lequel le séjour à température élevée est nettement plus long pour les particules que pour le liquide,les températures pouvant être identiques pour chacun des constituants de la suspension ou nettement supérieures pour le liquide; le procédé étant, dans le premier cas, du type "FSTP "in flow fraction specific thermal processing" ou traitement thermique continu fractionné, et dans le second cas, du type "Traitement thermique continu fractionné et à températures différentes".

15 - Procédé dans lequel les produits, obtenus selon une quelconque combinaison des revendications 1 à 24 sont emmagasinés aseptiquement dans des réservoirs souples dont la description générale figure aux brevets luxembourgeois 85954 et 86023, respectivement des 17.6.1985 et 25.7.1985, et perfectionnés par les dispositifs suivants, seuls ou en combinaisons:

a - De part et d'autre du plan de symétrie axial vertical et/ou à la partie supérieure du réservoir et/ou à la partie inférieure du réservoir, sont fixées, par un moyen quelconque, de 2 à 2 n poches longitudinales étanches extérieures à la paroi du réservoir (n entier 1,2,4...) segmenté ou non, chaque segment étant équipé de tubulures permettant le remplissage et la vidange de leur espace intérieur par un gaz ou un liquide.

b - Au voisinage du plan de symétrie axial vertical et à la partie inférieure du réservoir, celui-ci est muni d'un certain nombre de tubulures souples raccordables à une ou plusieurs tuyauteries d'alimentation ou de vidange; même s'il est jugé nécessaire, des tubulures de longueur adéquate sont fixées sur les extrémités non cylindriques des réservoirs. la distance minimale entre 2 tubulures voisines est égale à la moitié du diamètre théorique de l'enveloppe principale du réservoir, chacune des tubulures dont question étant ou pouvant être équipée d'un dispositif aseptique d'oburation ou d'étranglement.

c - Au voisinage du plan de symétrie axial vertical et dans les parties supérieures du réservoir, celui -ci est muni d'une ou plusieurs ouvertures raccordables aseptiquement à un orifice rigide garni d'un dispositif d'obturation aseptique adéquat permettant une visite de l'intérieur du réservoir, ou permettant d'y introduire des dispositifs accessoires, ou permettant le raccordement à des tuyauteries de manoeuvre de gaz ou de liquide.

26 - Les appareils nouveaux conçus pour la mise en oeuvre du procédé selon les principes énoncés aux revendications 17 à 21.

27 - Les appareils selon la revendication 15 munis d'une grille, annulaire de préférence, et de surface aussi grande que possible, empêchant l'accès des impuretés semi-flottantes ou flottantes, qui ne décantent pas dans la partie froide de l'appareil, aux tubulures de sortie vers les soupapes ou pompes d'élimination du liquide de mise en suspension ayant servi au cours des opérations de cuisson et de stabilisation; cette grille étant pourvue des appareils de sécurité nécessaires en cas de colmatage intempestif.

28 - Les réservoirs souples réalisés selon les principes énoncés à la revendication 25.

29 - les "déviateurs de flux" du type général de robinets à voies multiples, caractérisés par:

a - Un boisseau comportant une ou plusieurs tubulures de diamètre égal ou supérieur à 80 mm, raccordant, suivant un tracé assurant un flux sans heurts, la tubulure d'entrée à la tubulure de sortie.

b - Les tubulures du boisseau sont assemblées à l'intérieur d'une enveloppe formant la surface extérieure du boisseau et cette enveloppe de forme de symétrie circulaire autour de l'axe de rotation (sphère, cylindre, tronc de cône, etc) est lestée de façon à être à peu près flottante dans le liquide de mise en suspension.

c - Le boisseau réalisé selon 29a et 29b a des dimensions telles que le jeu entre le boisseau et le corps du déviateur de flux soit légèrement inférieur à la plus petite dimension des particules en suspension.

d - Si nécessaire, le mouvement de rotation du bois seau est guidé par des galets sur paliers auto-lubrifiants.

e - Des tubulures supplémentaires, correctement localisées, sont prévues dans le corps du déviateur de flux pour permettre une circulation de liquide stérile entre le boisseau et le corps.

30 - A titre de produits nouveaux:

a - Les produits améliorés obtenus par mise en oeuvre du procédé selon les revendications 1 à 25.

b - Les produits améliorés en mettant à profit la possibilité offerte par le magasinage aseptique en réservoirs souples des produits selon la revendication 20, c'est à dire les produits obtenus par mélange de liquides emmagasinés dans un même réservoir ou dans des réservoirs différents.

a - Les produits sucrés ou confits par traitements post-cuisson et stabilisation dans des réservoirs décrits dans la revendication 25 et équipés comme accessoire d'une grille ou tamis flottant empêchant les particules d'atteindre les sorties de liquide à la partie supérieure du réservoir, selon la revendication 21.

PLANCHE 1

FIG 1

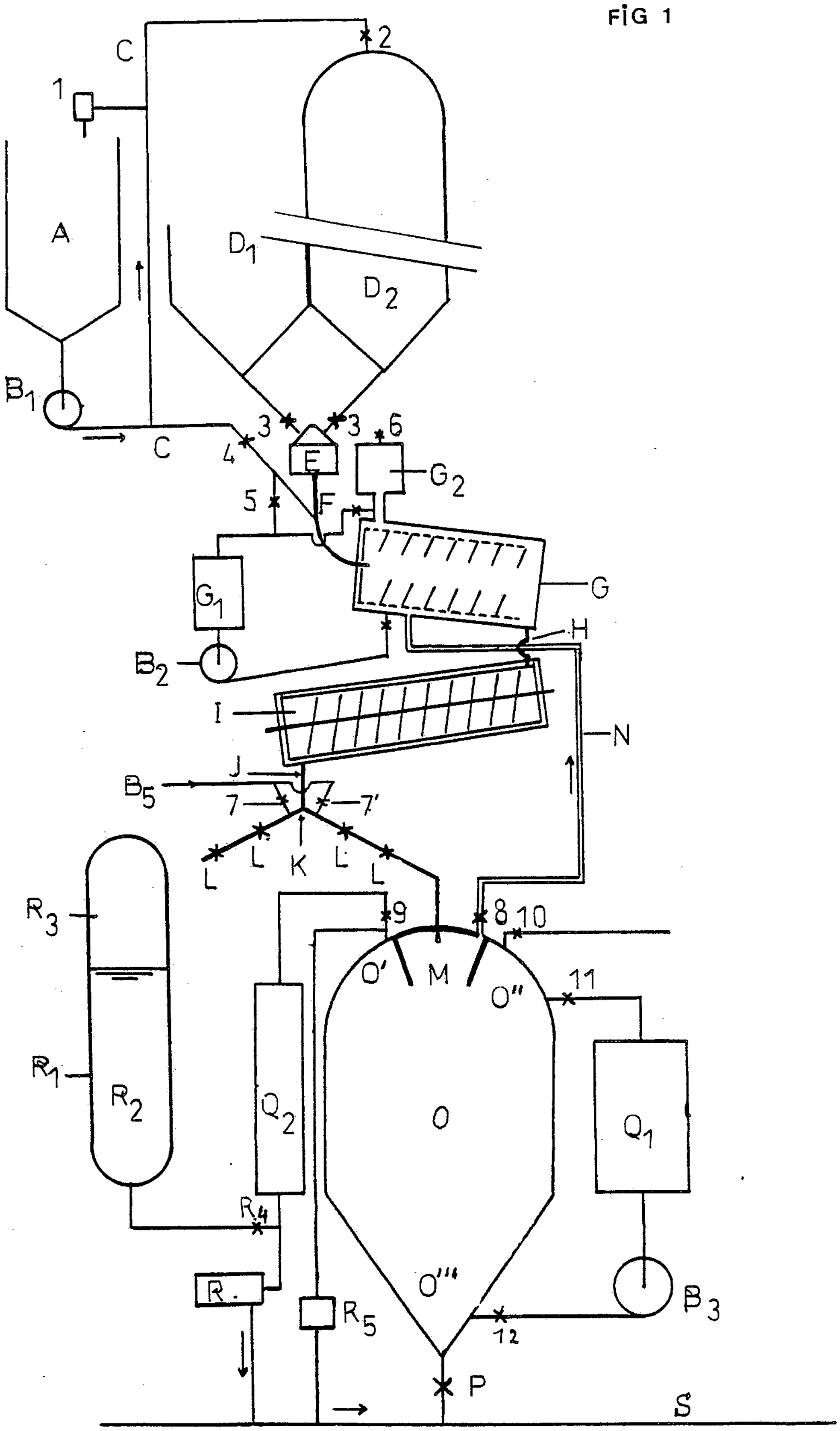

PLANCHE II

FIG. 2

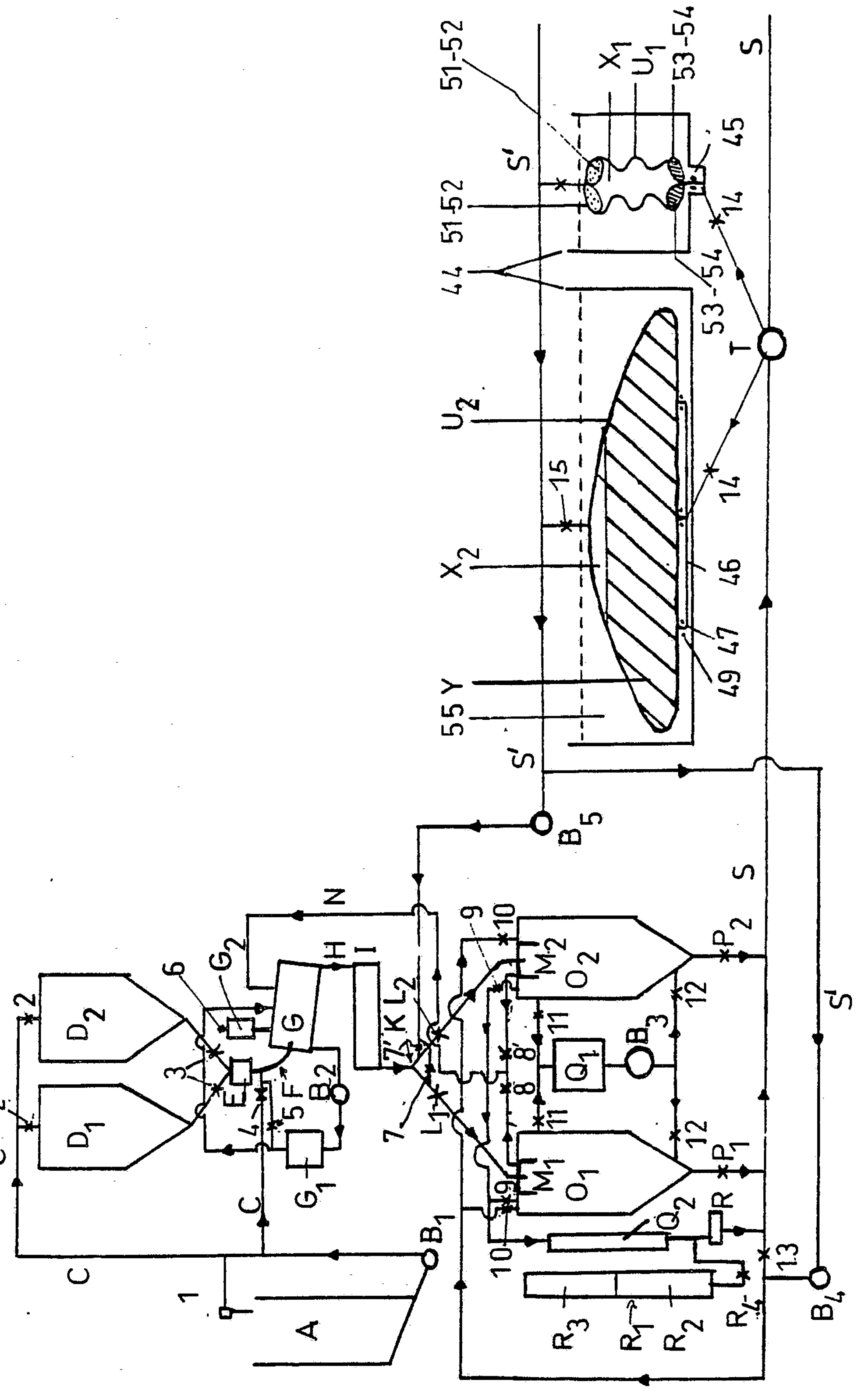

PLANCHE III

FIG. 3

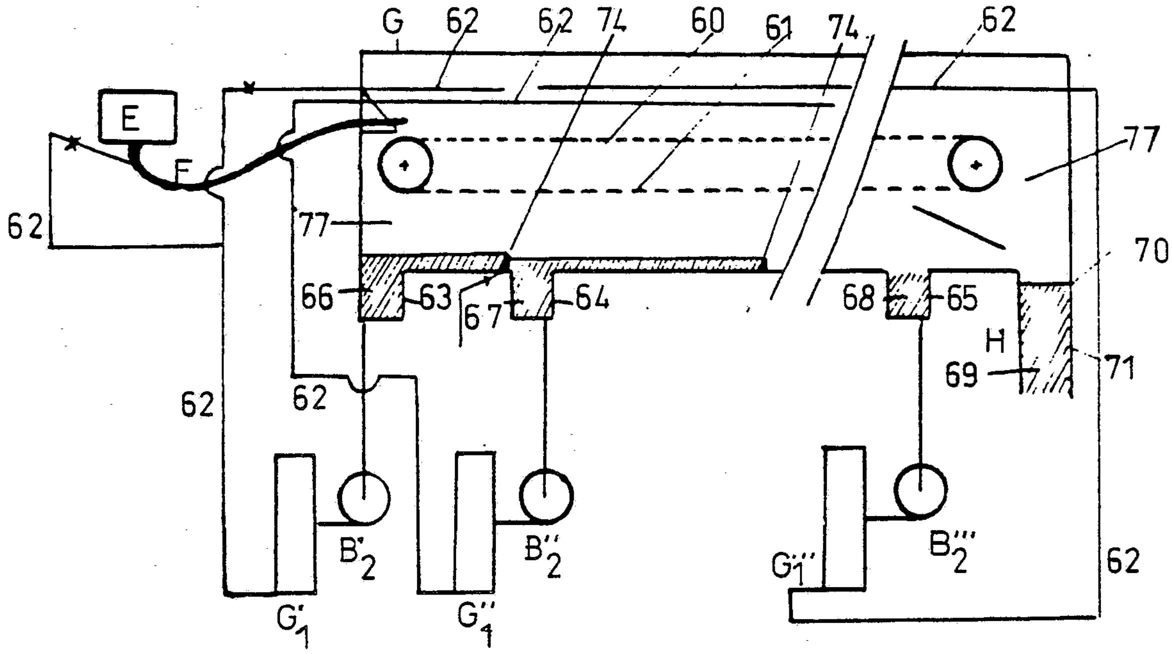


FIG. 4

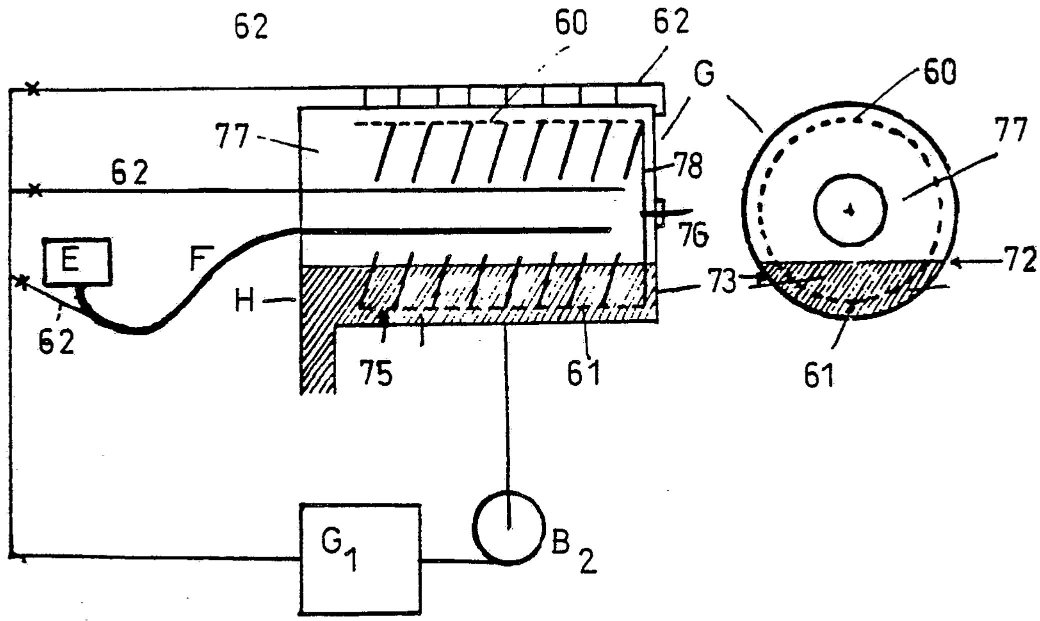

PLANCHE IV

FIG. 5

Appareil K

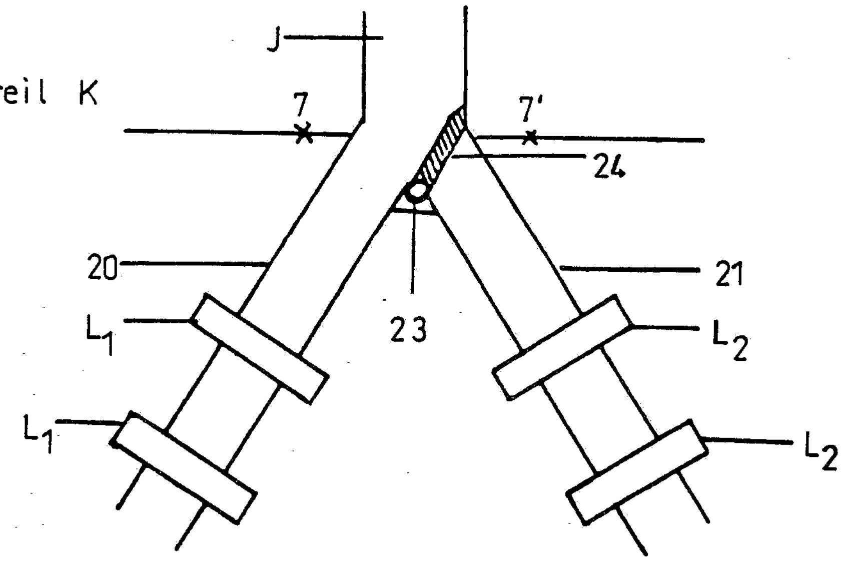


FIG. 6

Appareil K

fig.A

fig.B

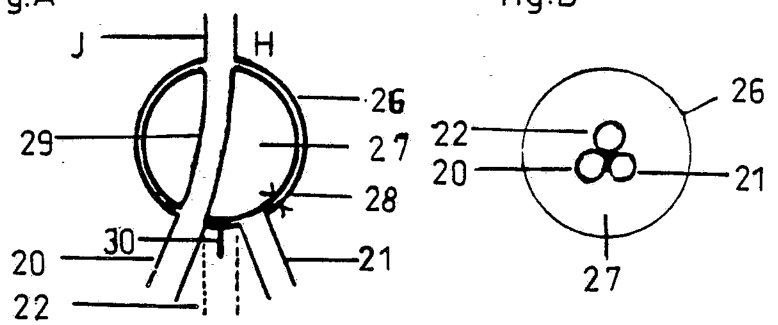


FIG. 7

fig .A

fig. B

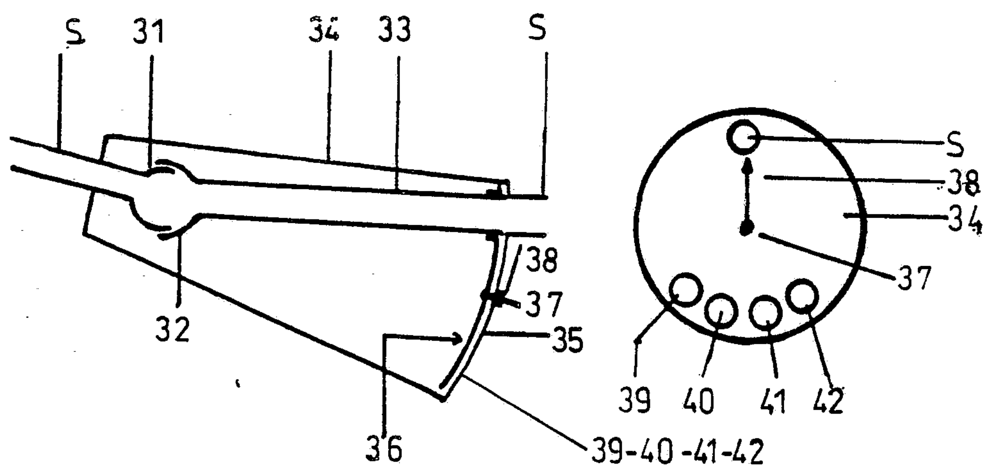

PLANCHE V

FIG. 8

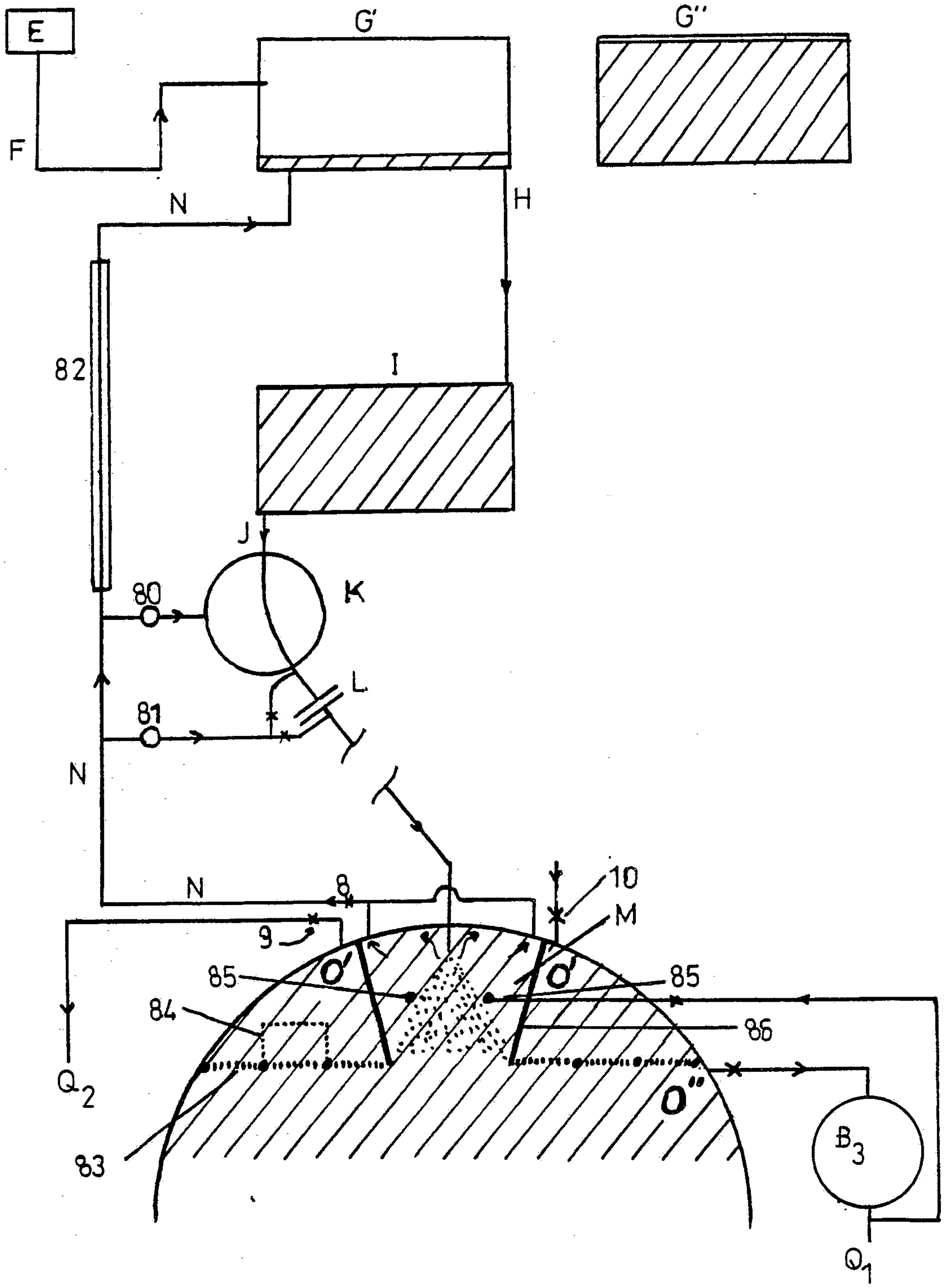

PLANCHE VI

FIG. 9

fig. A

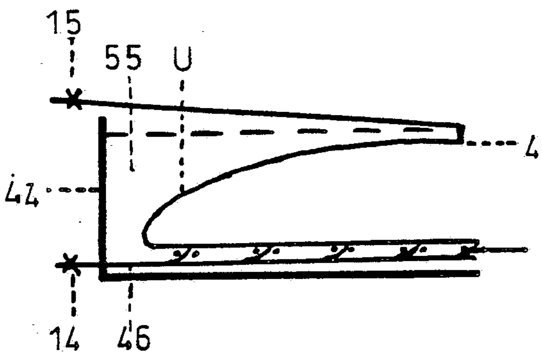


fig. B

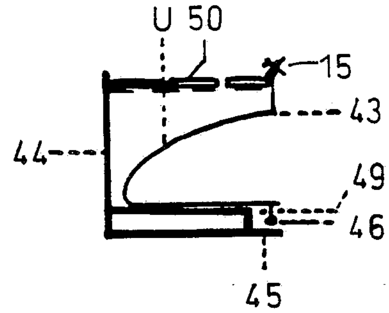


fig. C

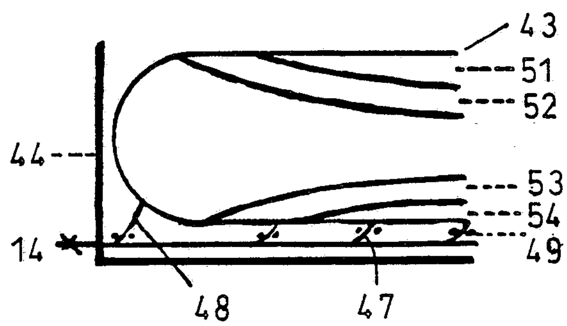


fig. D

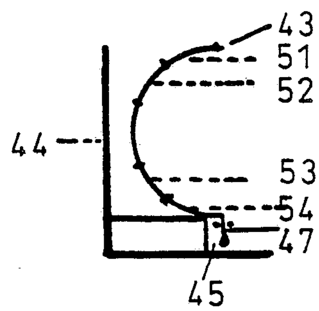


fig. E

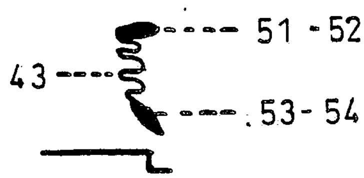


fig. F

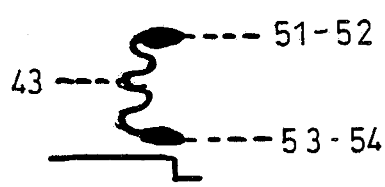


fig. G

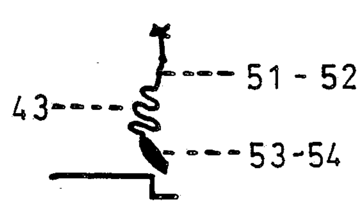

PLANCHE VII

FIG. 10

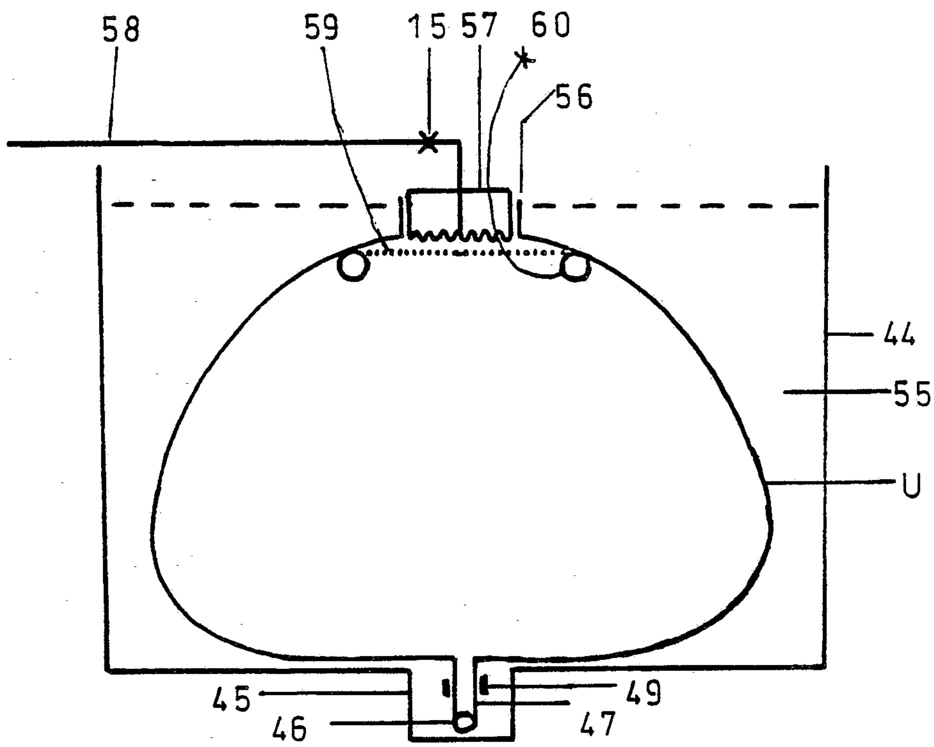

PLANCHE VIII

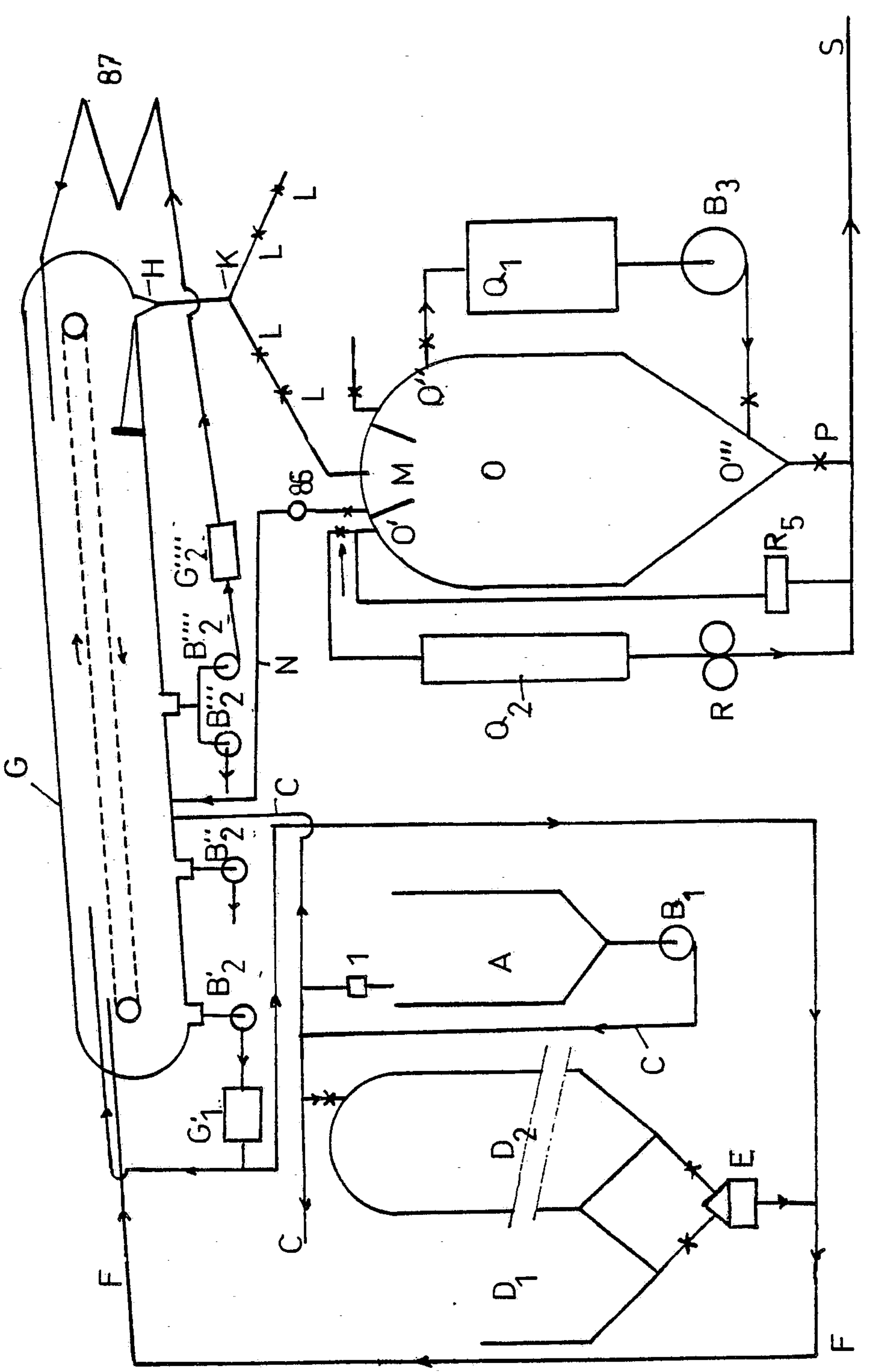


FIG. 11

PLANCHE IX

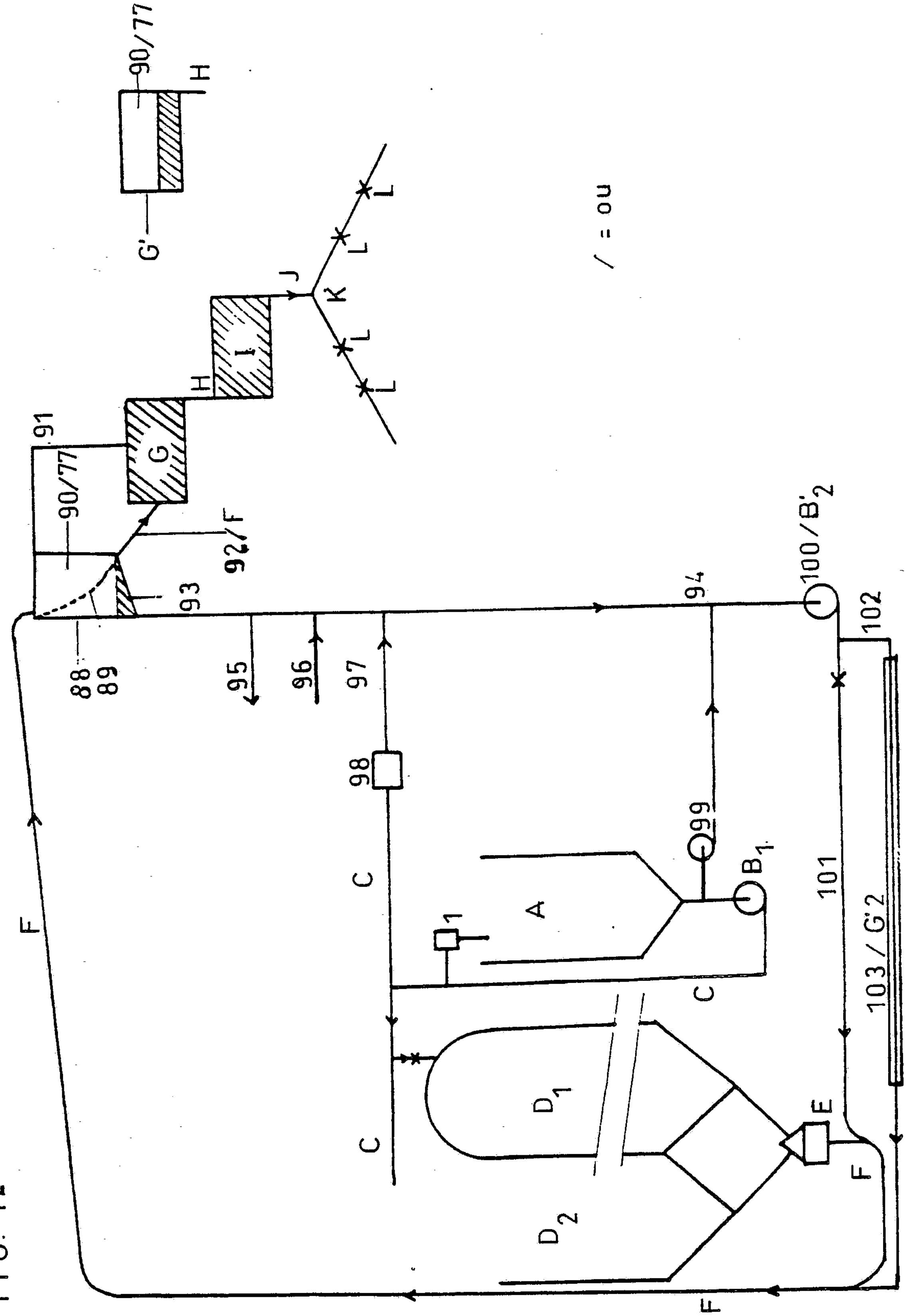


FIG. 12

Office européen des brevets

# RAPPORT DE RECHERCHE EUROPEENNE

Numero de la demande

EP 89 87 0080

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-1 313 281 (A.P.V. CO. LTD.)<br>* revendications 1-8 *<br>--- | 1 | A 23 L 3/00<br>A 23 L 3/22 |
| A | DE-A-2 921 706 (J. LAUFENBERG)<br>* revendication 1 *<br>--- | 1,7 | |
| A | DD-A- 104 022 (J. HERRMANN et al.)<br>* page 3, lignes 18-40; revendications 1-3 *<br>--- | 1,2 | |
| A | WO-A-8 600 503 (H. DALLINGA)<br>* revendications 1-8 *<br>----- | 1,7 | |
| | | | **DOMAINES TECHNIQUES RECHERCHES (Int. Cl.4)** |
| | | | A 23 L 3/00 |

Le présent rapport a été établi pour toutes les revendications

| Lieu de la recherche | Date d'achèvement de la recherche | Examinateur |
|---|---|---|
| BERLIN | 25-08-1989 | SCHULTZE D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)